# FASCICULE DE BREVET EUROPEEN

(11) **EP 2 932 182 B1**
(45) Date de publication et mention de la délivrance du brevet: **14.04.2021**
(21) Numéro de dépôt: 13810918.6
(22) Date de dépôt: 11.12.2013
(51) Int. Cl.: F41G 3/06, G01C 21/00, G01C 25/00, F41G 3/22, F41G 3/32

(54) **PROCEDE DE GEO LOCALISATION PRECISE D'UN CAPTEUR D'IMAGES EMBARQUE A BORD D'UN AERONEF**
VERFAHREN ZUR GENAUEN GEOLOKALISIERUNG EINES BILDSENSORS AN BORD EINES FLUGZEUGS
METHOD FOR ACCURATELY GEOLOCATING AN IMAGE SENSOR INSTALLED ON BOARD AN AIRCRAFT

(30) Priorité: 12.12.2012 FR 1203381
(43) Date de publication de la demande: 21.10.2015
(73) Titulaire: Thales, 92400 Courbevoie (FR)
(72) Inventeur: PETIT, Jean-Marie, F-91440 Bures sur Yvette (FR)
(74) Mandataire: Marks & Clerk France
(86) Numéro de dépôt international: PCT/EP2013/076235
(87) Numéro de publication internationale: WO 2014/090878

(56) Documents cités:
- WO-A1-2011/159206
- US-A- 4 168 524
- US-A1- 2006 210 169
- US-A1- 2007 010 965

## Description

Le domaine de l'invention est celui de la localisation précise d'un capteur d'images embarqué à bord d'un aéronef, sachant que l'on dispose des conditions de prise de vue du capteur, c'est à dire sa localisation (position géographique) et son orientation, sa localisation étant approximative et éventuellement aussi son orientation.

Le capteur d'images comporte un imageur, un télémètre, des moyens de mesure de l'orientation de sa LDV (Ligne De Visée) et des moyens de poursuite d'un point fixe au sol.

La position géographique de l'aéronef n'est pas toujours suffisamment précise ni a fortiori celle du capteur embarqué, en raison par exemple de la dérive inertielle de la centrale inertielle de l'aéronef, en l'absence de GPS. Cette dérive peut typiquement atteindre 1 mile nautique au bout d'1 h de vol, alors que l'on vise une précision de positionnement bien inférieure à 100m.

La précision de la connaissance de l'orientation absolue de la LDV est également généralement insuffisante c'est-à-dire supérieure à 3 mrd, par exemple dans les cas suivants :
❖ Dans le cas où l'orientation de la LDV du capteur est obtenue par la contribution de l'attitude de l'aéronef, des calages et de la recopie des angles mécaniques du capteur, sa précision est limitée par les désalignements inconnus existant entre la centrale inertielle de l'aéronef et la LDV du capteur. En outre, ces désalignements sont en général différents en vol et au sol, ce qui rend difficile leur éventuelle calibration.
❖ Lorsque le capteur optronique n'est pas équipé d'une Unité de Mesure Inertielle (constituée de 3 gyromètres et 3 accéléromètres) qui pourrait lui permettre le cas échéant de déterminer son attitude soit de manière autonome, soit à partir d'un alignement inertiel sur l'attitude a priori plus précise de l'aéronef. Ou si c'est le cas, ses capteurs inertiels peuvent être de classe insuffisante, pour des raisons de volume disponible ou de coût.

Un moyen classique pour améliorer la précision (« recaler ») de la position géographique d'un capteur ou celle de l'orientation de sa LDV par rapport aux position et orientation imprécises dont on dispose, est l'utilisation d'amers. On rappelle qu'un amer est un point remarquable fixe au sol visible à longue distance (château d'eau, clocher, antenne, croisement, pont, bâtiment,...) pour lequel les coordonnées géographiques sont connues avec précision. Cependant :
❖ La recherche et la constitution de listes d'amers utilisables nécessite une préparation de mission, ce qui est contraignant et non forcément compatible de la notion d'opportunité.
❖ L'opération de recherche et de reconnaissance en vol de l'amer prévu peut s'avérer fastidieuse.
❖ Le recalage simultané de la position du capteur et de l'orientation de sa LDV n'est pas possible par un recalage classique "mono-visée" sur un seul amer, c'est-à-dire consistant à n'exploiter qu'une seule visée sur l'amer, la mesure pouvant être alors la simple orientation de la LDV ou bien le vecteur orientation-distance en cas de télémétrie. Ce recalage mono-visée permet soit de recaler l'orientation de la LDV dans le cas où la position du capteur est connue avec précision, soit de recaler la position du capteur dans le cas où l'orientation de la LDV (et la distance mesurée) est suffisamment précise.
❖ Un moyen de recaler successivement la position du capteur puis l'orientation de sa LDV, est d'utiliser 2 amers judicieusement placés, l'un proche (par exemple à 5km) puis un autre lointain (par exemple à 30km). Mais il n'y a pas nécessairement des amers pratiques, précis et judicieusement placés sur tous les théâtres opérationnels.
❖ La précision de recalage dépend aussi de l'exactitude avec laquelle la LDV est pointée sur l'amer au moment de la mesure. Or, du fait par exemple de leur forme ou de leur contexte, tous les amers ne se prêtent pas nécessairement à une poursuite précise de la LDV sur eux.

Le document US 2007/010965 décrit un procédé pour localiser une position d'observation et déterminer un azimut réel en utilisant une cible choisie par un utilisateur.

Le document US 4,168,524 décrit un procédé permettant de déterminer la position d'un aéronef à partir de données issues d'une centrale inertielle et d'un traçage de réflecteurs coopératifs au sol.

Le but de l'invention est de pallier ces inconvénients.

La solution selon l'invention est basée sur la création d'un ou plusieurs amers d'opportunité, directement en vol à l'aide d'une base de données terrain (BD terrain) planimétrique et altimétrique, géo-référencée, sans préparation de mission particulière.

Plus précisément l'invention a pour objet un procédé de géo localisation d'un capteur d'images ayant une ligne de visée, LDV, embarqué à bord d'un aéronef.

Il est principalement caractérisé en ce que la position géographique étant approximative ainsi que l'orientation de sa LDV, il comporte :
- une étape de création d'au moins un amer d'opportunité comportant les sous-étapes suivantes :
   ❖ sur un écran de visualisation d'images acquises, avec repérage dans ces images de l'axe d'un télémètre au moyen d'une incrustation de type « réticule » dont la direction en espace scène représente la LDV du capteur d'images, repérage par un opérateur d'un élément fixe au sol remarquable,
   ❖ déplacement de la LDV par l'opérateur afin d'amener le réticule matérialisant l'axe du télémètre sur cet élément fixe remarquable,
   ❖ poursuite de cet élément fixe par des moyens de poursuite,
   ❖ estimation de la position géographique de cet élément fixe à partir de conditions de prise de vue, CPDV fournies par un dispositif apte à les déterminer, cette position étant également approximative,
   ❖ à partir de la position approximative de cet élément fixe poursuivi, recherche dans une base de données terrain, BD terrain de l'endroit correspondant à une zone centrée sur l'élément fixe approximativement positionné, cette zone étant de dimensions prédéterminées,
   ❖ affichage d'une image terrain de cet endroit, construite à partir de la BD terrain et repérage par l'opérateur de l'élément remarquable sur cette image,
   ❖ pointage par l'opérateur dans l'image terrain affichée, de cet élément remarquable, et récupération dans la BD terrain des coordonnées géographiques pointées, cet élément fixe remarquable sur lequel la LDV est en poursuite devenant ainsi amer d'opportunité,
- le capteur (100) étant en mouvement par rapport à l'amer d'opportunité (95), une étape de localisation précise du capteur (100) déterminée à partir des coordonnées géographiques de cet amer d'opportunité (95) poursuivi, par un filtre de Kalman alimenté par plusieurs mesures de distances entre le capteur et l'amer d'opportunité et par plusieurs mesures de l'orientation de la LDV du capteur vers l'amer d'opportunité, avec une mesure de l'orientation pour chaque mesure de télémétrie, permettant simultanément l'estimation précise de l'orientation de la LDV.

Ainsi, sans aucune préparation de mission, la création et l'utilisation d'amer devient possible en opportunité en vol, simplement en profitant de n'importe quel point fixe remarquable (croisement, bâtiment, ...) sur lequel le capteur d'images est capable de mettre sa LDV en poursuite.

De plus, étant donné que cet amer d'opportunité est « par construction » adapté à de la poursuite de la LDV sur lui, son utilisation, qui requiert un pointage précis de la LDV sur lui au moment de la ou des mesures, sera donc forcément précise.

Selon une première caractéristique de l'invention, l'estimation approximative de la position géographique de l'élément fixe poursuivi est effectuée suite à une mesure de distance par télémétrie venant compléter les CPDV.

Selon une caractéristique de l'invention, l'image affichée, issue de la BD terrain, est une image terrain projetée en fonction des CPDV.

Selon une autre caractéristique de l'invention, il comporte une étape d'affichage de l'image acquise projetée en fonction des CPDV pour se ramener à une ortho-image réelle.

L'étape de création de l'amer d'opportunité comporte avantageusement une étape de marquage de l'empreinte au sol de l'image acquise, sur l'image terrain affichée. Eventuellement, elle comporte également une étape de visualisation de la situation globale: image terrain de l'ensemble de la zone géographique englobant les positions capteur et point poursuivi au sol, avec représentation sur cette image terrain de ces positions, de la LDV et de l'empreinte au sol de l'image acquise, à partir des CPDV disponibles à bord.

L'image terrain est avantageusement déplaçable manuellement latéralement en latitude longitude, ainsi que zoomable et dé-zoomable.

L'invention a aussi pour objet un procédé de localisation d'une cible à partir d'un capteur embarqué géo-localisé tel que décrit, caractérisé en ce qu'il comprend une étape de localisation de la cible par rapport au capteur.

L'invention concerne également un capteur d'images ayant une ligne de visée, LDV et comportant :
- un imageur apte à acquérir des images, ayant un axe optique, et destiné à être embarqué à bord d'un aéronef,
- un télémètre harmonisé avec l'axe optique de l'imageur, destiné à être embarqué à bord de l'aéronef, l'axe optique du télémètre définissant la LDV du capteur,
- un moyen de poursuite destiné à être embarqué à bord de l'aéronef, configuré pour permettre à la LDV de rester accrochée sur un élément fixe au sol,
- un dispositif configuré pour déterminer les conditions de prise de vue (CPDV) du capteur, c'est-à-dire au minimum sa position géographique et l'orientation de sa LDV, destiné à être embarqué à bord de l'aéronef,
   et comportant en outre :
- un dispositif configuré pour la visualisation temps réel des images acquises par l'imageur, avec repérage dans ces images de l'axe du télémètre au moyen d'un « réticule » dont la direction en espace scène représente la LDV du capteur d'images,
- un dispositif configuré pour permettre à un opérateur de déplacer l'orientation de la LDV,
- une base de données terrain, BD terrain planimétrique et altimétrique, géo-référencée,
- un dispositif configuré pour l'affichage d'une zone de la BD terrain, muni d'un pointeur apte à être commandé par l'opérateur par des moyens de commande du pointeur,
- une unité de traitement reliée aux éléments précédents, et configurée pour mettre en œuvre le procédé de géo localisation tel que décrit. Le dispositif de visualisation et/ou le dispositif permettant à un opérateur de déplacer l'orientation de la LDV, et/ou la BD terrain, et/ou le dispositif d'affichage d'une zone de la BD terrain, et/ou l'unité de traitement peuvent être déportés ou destinés à être embarqués à bord de l'aéronef.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de dispositif selon l'invention,
la figure 2 représente schématiquement un exemple de capteur apte à mettre en œuvre le procédé selon l'invention, et illustre les angles utilisés dans le procédé selon l'invention,
les figures 3 illustrent la création d'un amer d'opportunité, ces illustrations utilisant des données issues du site IGN « Géoportail3D », avec sur chacune des figures une image acquise à droite, et à gauche, une vue globale (fig 3a), une image terrain sans projection correspondant à l'image acquise et issue de la BD, non zoomée et zoomée (fig 3b), une image terrain correspondant à l'image acquise et issue de la BD, projetée selon les CDPV de l'image acquise, non zoomée et zoomée (fig 3c),
la figure 4 illustre un mode de réalisation en multi-télémétrie-angulation.

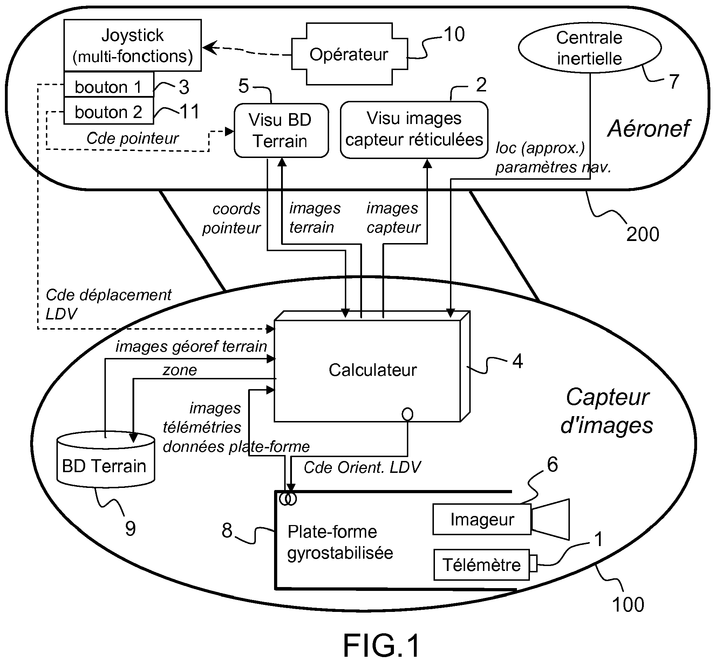

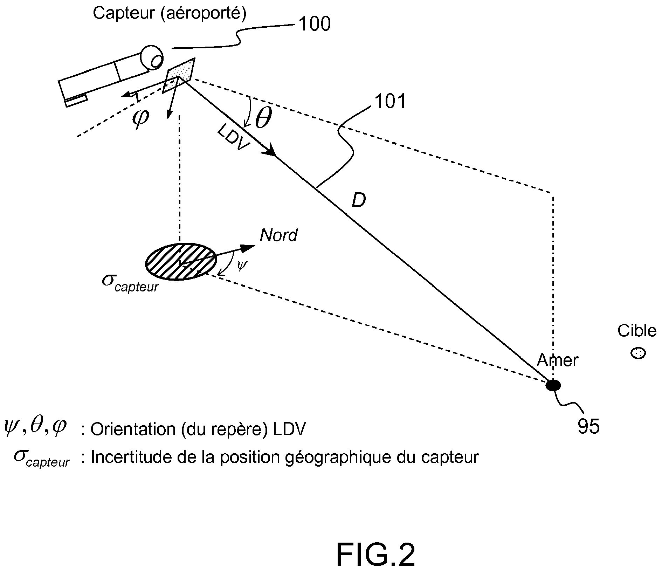

Le capteur d'images 100 décrit en relation avec les figures 1 et 2, comporte :
- un imageur 6 apte à acquérir des images, ayant un axe optique et destiné à être embarqué à bord de l'aéronef 200,
- un télémètre laser 1 harmonisé avec l'axe optique de l'imageur, et destiné à être embarqué à bord de l'aéronef, le télémètre et l'imageur étant fixés sur une plate-forme gyrostabilisée 8, l'axe optique du télémètre étant la LDV du capteur,
- un dispositif de visualisation 2 temps réel des images acquises en vol, avec repérage dans ces images de l'axe du télémètre au moyen d'un « réticule » dont la direction en espace scène représente la LDV du capteur d'images,
- un dispositif tel qu'une centrale inertielle 7, apte à déterminer avec l'unité de traitement, les conditions de prise de vue (CPDV) du capteur, c'est-à-dire au minimum sa position géographique et l'orientation de sa LDV. Les entrées utilisables peuvent être les sorties de centrale inertielle 7 ainsi que les recopies angulaires de la plate-forme gyrostabilisée 8 supportant les capteurs optiques imageur 6 et télémètre 1.
- un dispositif 3, par exemple un « joystick », permettant à un opérateur de déplacer l'orientation de la LDV,
- un moyen de poursuite destiné à être embarqué à bord d'un aéronef, permettant à la LDV de rester accrochée sur un élément fixe au sol 95, comportant par exemple un écartomètre image travaillant en temps réel à partir des images acquises, et délivrant des écartométries alimentant une boucle d'asservissement et d'orientation de la plate-forme 8 supportant télémètre et imageur, permettant ainsi de maintenir la LDV en poursuite sur ce point fixe,
- une unité de traitement 4 (calculateur) intégrant éventuellement le moyen de poursuite, apte à :
   ∘ délivrer continument une position géographique du capteur et une orientation de sa LDV. Les entrées utilisables pouvant être les sorties de la navigation aéronef (Centrale Inertielle 7) ainsi que les recopies angulaires de la plate-forme gyrostabilisée 8 supportant l'imageur et le télémètre. Par orientation de LDV, il faut comprendre les 3 angles d'Euler (*Ψ,θ,ϕ*) définissant l'orientation dans l'espace (ou « attitude ») d'un repère tridimensionnel lié à la LDV et au capteur comme on peut le voir figure 2.
   ∘ délivrer les consignes d'orientation de la LDV, notamment en poursuite à partir du traitement des images acquises,
   ∘ réaliser les calculs liés à la méthode MTA-FK décrite plus loin, par un filtre de Kalman alimenté par les mesures de télémétrie et d'orientation LDV mis en œuvre pendant les phases de poursuite sur point fixe.
- une BD terrain 9 planimétrique et altimétrique, géo-référencée, éventuellement intégrée au capteur 100 comme montré dans l'exemple de la figure, et apte à être exploitée par l'unité de traitement 4,
- un dispositif 5 d'affichage d'une zone de la BD terrain exploitée, muni d'un pointeur apte à être commandé par l'opérateur par des moyens de commande 11 pour ainsi être déplacé manuellement dans l'image terrain par l'opérateur.

La figure 1 n'est pas limitative en termes d'emplacements possibles des différents éléments. Elle illustre l'exemple d'une nacelle ou d'une boule optronique fixée en emport sous aéronef et incluant le capteur 100, mais le capteur d'images pourrait aussi bien être intégré dans l'aéronef 200. L'opérateur, le dispositif de visualisation et/ou le dispositif permettant à un opérateur de déplacer l'orientation de la LDV, la BD terrain, le dispositif d'affichage d'une zone de la BD terrain, et/ou une part du calculateur pourraient aussi être au sol, avec une liaison de données entre une station-sol et l'aéronef.

Le procédé selon l'invention vise à améliorer la précision de la position géographique et de l'orientation de la LDV du capteur par rapport à une position géographique imprécise (entachée d'une erreur typiquement comprise entre 100m et 1000m) dont on dispose, l'orientation de sa LDV étant éventuellement également imprécise (entachée d'une erreur typiquement comprise entre 3 et 10 mrd). Ceci est obtenu par :
- la création d'au moins un amer d'opportunité sans préparation de mission, puis dans la foulée,
- la localisation précise du capteur à partir des coordonnées géographiques de cet amer et d'au moins une mesure de distance entre le capteur et cet amer poursuivi.

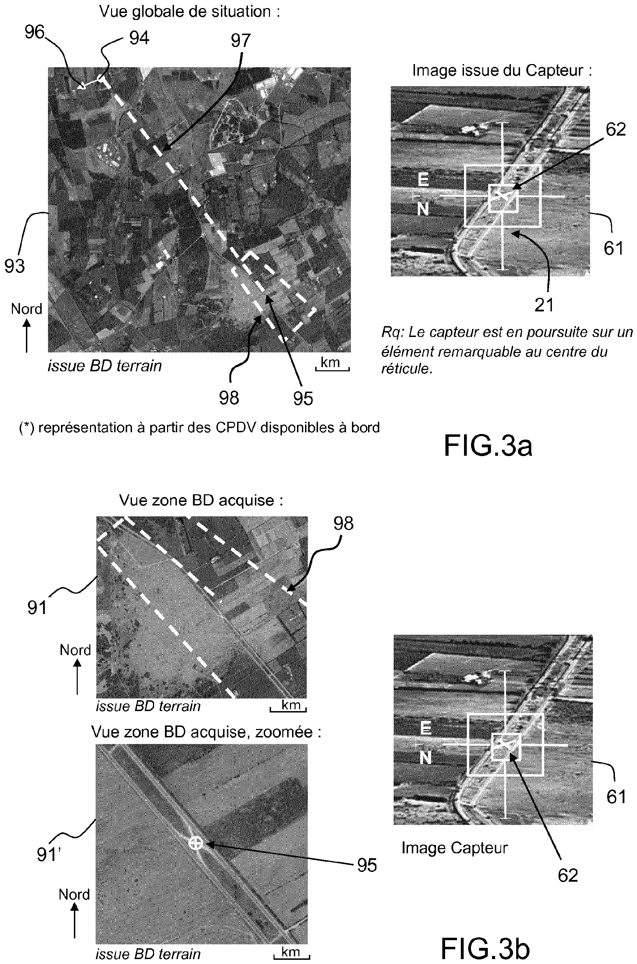

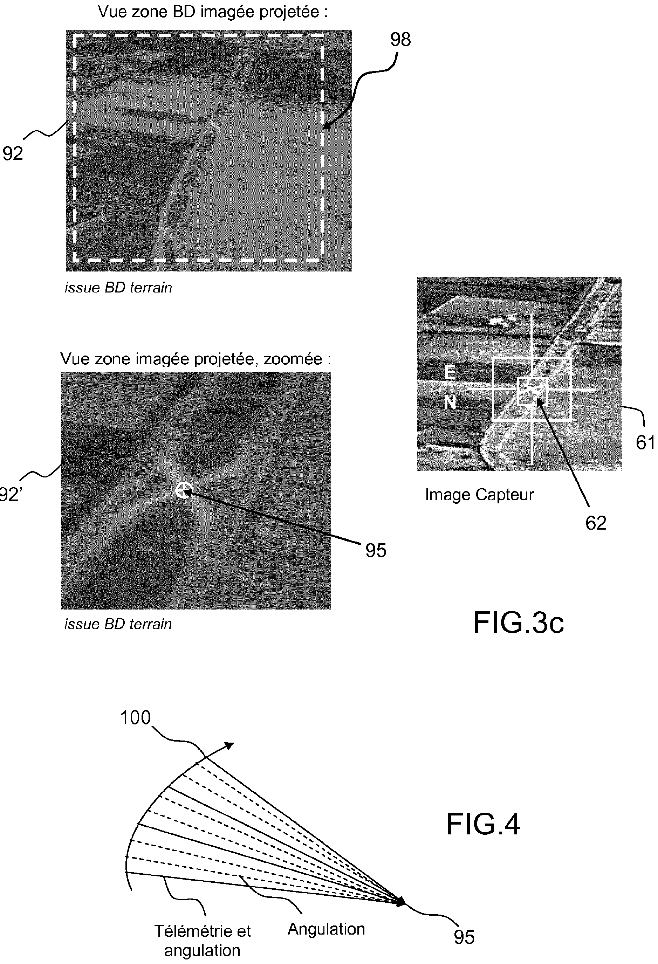

L'étape de création d'un amer d'opportunité comporte les sous-étapes suivantes décrites en relation avec les figures 3 :
❖ repérage par un opérateur d'un élément fixe au sol remarquable sur l'écran de visualisation 2 des images acquises 61 (comme montré figure 3a), l'élément remarquable 62 pouvant être un croisement de routes, une intersection entre deux éléments linéiques, un bâtiment isolé ou caractéristique, etc ;
❖ déplacement manuel de la LDV par l'opérateur 10 (via l'utilisation d'un « joystick »3) afin d'orienter l'axe laser de télémétrie, matérialisé par le réticule 21, sur cet élément fixe remarquable 62 ;
❖ poursuite de cet élément fixe 62 par la LDV du capteur 100 via le moyen de poursuite, par exemple comportant un écartomètre image travaillant en temps réel à partir des images acquises, et délivrant des écartométries alimentant une boucle d'asservissement et d'orientation de la plate-forme 8, permettant ainsi de maintenir la LDV en poursuite sur cet élément fixe,
❖ estimation de la position géographique approximative de cet élément fixe à partir des CPDV (position capteur plus vecteur capteur-point poursuivi) avec éventuellement une mesure de la distance par télémétrie ; la position et l'orientation LDV du capteur 100 étant imprécises, la position estimée, résultante, du point fixe poursuivi l'est aussi,
❖ à partir de la position approximative de cet élément fixe 62 et de dimensions prédéterminées d'une zone centrée sur l'élément fixe (calculée à partir du champ de vue de l'imageur 6 et de l'incertitude sur la position du point fixe 62), recherche par l'unité de traitement 4 dans la BD terrain 9 de l'endroit correspondant à cette zone (comme montré figure 3b), et constitution et affichage de l'image terrain 91 géoréférencée de cette zone, avec éventuellement la possibilité de « zoomer » (comme montré figure 3b avec l'image terrain 91') et « dé-zoomer » cette image centrée sur la position estimée du point fixe,
❖ éventuellement, par exemple par souci de confort pour l'opérateur, affichage d'une vue de cette image terrain projetée 92 selon les CPDV de manière à se rapprocher visuellement de l'image acquise 61 comme montré figure 3c, et ainsi faciliter la comparaison de ces deux images 61, 92 ; cette image terrain projetée 92 peut également être zoomée (comme montré figure 3c avec l'image terrain 92') ou dézoomée. Selon une alternative on réalise l'inverse en affichant l'image acquise projetée à partir des CPDV pour se ramener à une ortho-image réelle comparable à l'image terrain,
❖ éventuellement, incrustation dans l'image terrain affichée de l'empreinte au sol 98 de l'image capteur 61, à partir de la projection du champ de vue de l'imageur 6 sur le terrain,
❖ éventuellement, et toujours dans le but de faciliter la tâche de l'opérateur 10, affichage d'une vue globale 93 montrée figure 3a, « zoomable » et « de-zoomable », déplaçable latéralement, de l'image terrain de la zone élargie incluant les positions estimées du capteur 94 et du point fixe poursuivi 95 (correspondant donc au point fixe 62 de l'image issue du capteur) ainsi que la direction 96 de la route aéronef, la LDV 97 et l'empreinte au sol 98 de l'image capteur, avec toutes ces différentes informations incrustées dans l'image terrain globale 93,
❖ repérage de l'élément fixe remarquable 95 dans l'image terrain (projetée 92 ou non 91) sur lequel le capteur 100 est en poursuite, ce repérage étant facilité lorsqu'on dispose simultanément des deux images à savoir l'image issue de la BD terrain 91 ou 92 et l'image réelle du capteur (oblique 61 ou en vue ortho-image) ; ce repérage peut être assuré par l'opérateur 10, éventuellement assisté d'un dispositif de reconnaissance d'images,
❖ l'opérateur ayant alors pointé par les moyens de commande 11 du pointeur, sur l'élément remarquable 95 poursuivi par le capteur, repéré dans l'image terrain 92' (ou 92 ou 91'), ou ayant validé le résultat de la reconnaissance d'images, récupération par l'unité de traitement 4 dans la BD terrain 9 des coordonnées géographiques (latitude, longitude, hauteur) de l'élément pointé 95, cet élément 95 devenant ainsi amer d'opportunité, dont la précision des coordonnées dépend uniquement de la qualité de la BD terrain exploitée.

Cette création d'amer est basée sur l'utilisation de données de terrain fournies par exemple par la base de données « Geobase Défense » qui comporte deux composantes :
∘ Un MNT (Modèle Numérique de Terrain) de niveau 2 c'est à dire d'environ 30m de résolution (au format DLMS/DTED 2), contenant les altitudes du terrain,
∘ Des ortho-images de niveau 2, soit une résolution de l'ordre de 5m (au format GEOTIFF), dans le système de représentation ARC sur WGS84.

L'étape de localisation précise du capteur 100 est alors calculée à partir des coordonnées géographiques de cet amer d'opportunité 95 poursuivi et d'au moins une distance entre le capteur et cet amer, mesurée par le télémètre 1. Plusieurs modes de réalisation peuvent être envisagés, l'objectif étant bien entendu de « récupérer » au niveau du capteur la bonne précision de l'amer.

Selon un premier mode de réalisation, la position du capteur est imprécise mais l'orientation de sa LDV est connue avec suffisamment de précision.

L'étape de localisation précise du capteur peut alors être déterminée par une méthode directe à partir de la position géographique précise de l'amer d'opportunité et du vecteur amer-capteur. La direction du vecteur est donnée par la connaissance précise de l'orientation de la LDV et sa norme est obtenue par télémétrie (précise par nature), une seule télémétrie suffisant. Le vecteur est évalué à la date de la télémétrie, ce qui entraîne que la position obtenue du capteur est aussi celle correspondant à la date de la télémétrie. L'écart à la date de la télémétrie observé entre la position estimée du capteur avant la mesure et la position calculée à l'aide de la mesure est utilisé pour corriger (« recaler ») la position courante du capteur, faisant l'hypothèse que cet écart est constant, c'est-à-dire que l'erreur de position capteur est constante, au minimum entre la date de la télémétrie et la date courante, à laquelle la correction est faite.

Cette méthode utilisant la connaissance du vecteur capteur-amer par télémétrie et orientation de la LDV, est directe, instantanée. Sa précision, qui décroît linéairement en fonction de la distance entre le capteur et l'amer, est ainsi limitée par les erreurs d'orientation de la LDV qui, bien que dans ce cas supposées précises, ne sont pas nulles, et dans une moindre mesure par la précision de distance.

Selon un deuxième mode de réalisation, la position et l'orientation de la LDV sont imprécises, mais le capteur est proche de l'amer. Par proche, on entend que l'erreur angulaire sur sa LDV multipliée par la distance à l'amer entraîne une erreur de position négligeable devant la précision de position souhaitée pour le capteur. L'étape de localisation précise du capteur peut alors être déterminée comme précédemment par une méthode directe à partir de la position géographique précise de l'amer d'opportunité et du vecteur capteur-amer obtenu suite à télémétrie, une seule télémétrie suffisant.

Selon un troisième mode de réalisation, la position et l'orientation de sa LDV sont imprécises, mais le capteur est en mouvement par rapport à l'amer d'opportunité. L'étape de localisation précise du capteur peut alors être déterminée par une méthode par intégration temporelle.

Les méthodes par intégration temporelle requièrent d'être en poursuite sur un point fixe dont les coordonnées géographiques sont connues, en l'occurrence ici l'amer d'opportunité ; elles exploitent alors la succession des mesures angulaires (aussi désignées angulations) et/ou des mesures de distance à ce point pendant la durée du déplacement de l'aéronef. Ces méthodes peuvent d'une part fournir une estimation de la position géographique du capteur, et d'autre part permettre pour certaines d'entre elles d'identifier des biais angulaires sur la connaissance de l'orientation de sa LDV, permettant notamment d'améliorer les géolocalisations de cible ultérieures effectuées à l'aide du capteur.

On distingue différentes méthodes par intégration temporelle (ou méthodes multi-mesures) :
- les méthodes par multi-télémétrie qui n'utilisent que les mesures de télémétrie,
- les méthodes par multi-angulation qui n'utilisent que les mesures d'orientation de la ligne de visée,
- les méthodes par multi-télémétrie-angulation (méthodes MTA) qui exploitent simultanément les deux types de mesures, distance et angle.

Dans chacune de ces méthodes, on utilise aussi comme mesure la position de l'amer poursuivi.

Et on part d'une première estimation de la position du capteur que l'on cherche ensuite à affiner par filtrage au cours de la poursuite sur l'amer.

Rappelons que l'observabilité est la capacité à rendre mesurables les variables que l'on cherche à estimer.

Les précisions finales de localisation du capteur et d'estimation des biais angulaires affectant la LDV dépendent de l'observabilité apportée par le scénario, c'est-à-dire de la trajectoire aéronef par rapport à l'amer poursuivi et de la répartition spatiale des mesures angulaires et/ou de distance, et donc indirectement aussi de la durée de la poursuite sur cet amer. On notera que suivant les mesures utilisées, angulaires ou de distance, le scénario d'observabilité idéal n'est pas le même.

### Méthode par multi-télémétrie :

La méthode est basée sur la connaissance de plusieurs mesures de distance aéronef-amer obtenues par télémétrie. N'utilisant pas comme mesure l'orientation LDV pour remonter à l'estimation de la position du capteur, son principal avantage est donc d'être indépendante des erreurs d'attitude LDV. Par contre, il est nécessaire d'introduire des contraintes sur la trajectoire pour permettre l'observabilité, une simple trajectoire avion rectiligne étant insuffisante.

### Méthode par multi-angulation :

La méthode par multi-angulation consiste à n'utiliser que les mesures d'orientation LDV.

Elle peut être mise en œuvre par un Filtre de Kalman (FK) dont le principe de fonctionnement est le suivant :
- on mesure l'orientation de la LDV poursuivant l'amer,
- on compare cette mesure à une orientation estimée à partir de la position de l'amer et de la position estimée courante du capteur.

L'observabilité est apportée par l'évolution de l'écart entre la LDV effectivement asservie sur l'amer et la LDV connue à bord. Or cet écart est lié à l'erreur de positionnement du capteur, supposée de type biais, ce qui permet ainsi de l'estimer. Cette observabilité est d'autant meilleure que la trajectoire de l'avion permet une répartition spatiale variée des mesures.

Etant donné que la LDV est continûment asservie sur l'amer, la cadence des mesures n'est limitée que par la cadence de calcul de l'orientation de la LDV, ce qui peut avoir un intérêt lorsque les mesures angulaires sont bruitées.

Notons que par rapport à la multi-télémétrie, cette méthode est passive et présente donc l'avantage d'être discrète.

### Méthode par multi-télémétrie-angulation (méthode MTA) :

Les conditions d'observabilité entre la multi-télémétrie et la multi-angulation ne sont pas les mêmes. De plus, la multi-télémétrie comme la multi-angulation permettant toutes les deux d'obtenir une localisation du capteur, l'association des deux méthodes apporte des contraintes supplémentaires sur la solution, et permet ainsi de remonter à une estimation des biais angulaires existant sur l'orientation de la LDV.

En conséquence, ces deux méthodes sont complémentaires, ce qui conduit à rechercher des méthodes appelées méthodes MTA qui utilisent à la fois l'orientation de la LDV et les distances télémétrées lorsqu'elles sont présentes.

Parmi les méthodes MTA possibles, on utilise de préférence une méthode à base de Filtre de Kalman (que l'on nomme MTA-FK), celui-ci étant alimenté par des mesures de distance, à une cadence par exemple de 0.5Hz, lorsque les contraintes de discrétion le permettent, et d'orientation de la LDV à une cadence par exemple de 10Hz; il y a une mesure angulaire à chaque mesure de télémétrie, les autres mesures angulaires étant prises entre les télémétries comme illustré figure 4.

Pour l'utilisation de la mesure angulaire seule, on est ramené au cas précédent (multi-angulation). Pour l'utilisation des mesures couplant télémétrie et angulation, il s'agit en fait d'utiliser des vecteurs amer-capteur de mesure successifs. On compare à chaque nouveau vecteur amer-capteur mesuré, le même vecteur calculé à partir de la position capteur et de l'orientation LDV estimées courantes.

L'observabilité est apportée par l'évolution de l'écart entre le vecteur amer-capteur effectivement asservi sur l'amer et ce vecteur connu à bord. Or, comme précédemment, cet écart est lié à l'erreur de position du capteur, mais également aux erreurs d'orientation de la LDV, toutes erreurs supposées de type biais, ce qui est globalement le cas, ce qui permet ainsi de les estimer.

Le vecteur d'état du FK comprend au minimum :
- 3 états pour la position du capteur,
- 3 états pour l'attitude LDV,
- 1 état pour la distance capteur-amer.

Ce procédé basé sur ce FK délivre, en plus de l'estimation de la localisation du capteur, une confiance dans cette estimation à partir de la matrice de covariance des estimations.

Cette méthode MTA-FK a ainsi les avantages de recaler simultanément la position du capteur et l'orientation de sa LDV, à l'aide d'une poursuite sur un seul amer, et moyennant une trajectoire relative aéronef amer sans véritable contrainte, une trajectoire rectiligne convenant. La durée nécessaire à la poursuite n'excédant guère une vingtaine de secondes pour arriver à une bonne convergence des états du FK, et donc à une estimation précise de la position du capteur et de l'attitude LDV.

Une fois le capteur précisément localisé, avec une attitude LDV précise, il peut à son tour localiser précisément une cible. On change l'orientation de la LDV qui était pointée vers l'amer d'opportunité, pour viser maintenant la cible. On est alors ramené à une localisation de cible autonome par un capteur aéroporté, connaissant la position du capteur et le vecteur capteur-cible. La direction du vecteur étant issue de la connaissance de l'orientation de la LDV, et sa norme étant obtenue soit directement par télémétrie, soit indirectement par une méthode de type lancé de rayon sur MNT. On notera que si la cible est proche de l'amer, la localisation obtenue de la cible aura pratiquement la précision de l'amer, c'est-à-dire la précision de la BD terrain, même sans télémétrie. L'estimation des erreurs angulaires affectant la LDV est opérationnellement intéressante car elle permet la géo-localisation de cette cible avec une bonne précision uniquement à l'aide d'une mono-visée avec télémétrie.

## Revendications

1. Procédé de géo localisation d'un capteur d'images (100) ayant une ligne de visée, LDV (101) et embarqué à bord d'un aéronef (200), la position géographique du capteur étant approximative ainsi que l'orientation de sa LDV, ledit procédé comportant :
- une étape de création d'au moins un amer d'opportunité comportant les sous-étapes suivantes :
❖ sur un écran de visualisation (2) d'images acquises, avec repérage dans ces images de l'axe d'un télémètre (1) au moyen d'une incrustation de type « réticule » (21) dont la direction en espace scène représente la LDV du capteur d'images, repérage par un opérateur (10) d'un élément fixe au sol remarquable (62),
❖ déplacement de la LDV par l'opérateur afin d'amener le réticule (21) matérialisant l'axe du télémètre (1) sur cet élément fixe remarquable (62),
❖ poursuite de cet élément fixe (62) par des moyens de poursuite,
❖ estimation de la position géographique de cet élément fixe à partir de conditions de prise de vue, CPDV fournies par un dispositif (7, 8) apte à les déterminer, cette position étant également approximative,
❖ à partir de la position approximative de cet élément fixe poursuivi, recherche dans une base de données terrain BD terrain (9) de l'endroit correspondant à une zone centrée sur l'élément fixe (62) approximativement positionné, cette zone étant de dimensions prédéterminées,
❖ affichage d'une image terrain (91) de cet endroit, construite à partir de la BD terrain et repérage par l'opérateur de l'élément remarquable sur cette image (95),
❖ pointage par l'opérateur (10) dans l'image terrain (91, 91') affichée, de cet élément remarquable, et récupération dans la BD terrain (9) des coordonnées géographiques pointées, cet élément fixe remarquable (95) sur lequel la LDV est en poursuite devenant ainsi amer d'opportunité,
- le capteur (100) étant en mouvement par rapport à l'amer d'opportunité (95), une étape de localisation précise du capteur (100) déterminée à partir des coordonnées géographiques de cet amer d'opportunité (95) poursuivi, par un filtre de Kalman alimenté par plusieurs mesures de distances entre le capteur et l'amer d'opportunité et par plusieurs mesures de l'orientation de la LDV du capteur vers l'amer d'opportunité, avec une mesure de l'orientation pour chaque mesure de télémétrie, permettant simultanément l'estimation précise de l'orientation de la LDV.

2. Procédé de géo localisation d'un capteur embarqué selon la revendication précédente, **caractérisé en ce que** l'estimation de la position géographique approximative de l'élément fixe poursuivi est effectuée suite à une mesure de distance par télémétrie venant compléter les CPDV.

3. Procédé de géo localisation d'un capteur embarqué selon l'une des revendications précédentes, **caractérisé en ce que** l'image affichée issue de la BD terrain, est une image terrain projetée (92, 92') en fonction des CPDV.

4. Procédé de géo localisation d'un capteur embarqué selon l'une des revendications 1 à 2, **caractérisé en ce qu'**il comporte une étape d'affichage de l'image acquise projetée en fonction des CPDV pour se ramener à une ortho-image réelle.

5. Procédé de géo localisation d'un capteur embarqué selon l'une des revendications précédentes, **caractérisé en ce que** l'étape de création d'un amer d'opportunité comporte une étape de marquage de l'empreinte au sol (98) de l'image acquise, sur l'image terrain affichée (91, 92).

6. Procédé de géo localisation d'un capteur embarqué selon l'une des revendications précédentes, **caractérisé en ce qu'**il comporte une étape d'affichage de l'image terrain (93) visualisant la situation globale de l'ensemble de la zone géographique englobant les positions du capteur et du point poursuivi au sol, avec représentation sur cette image terrain de ces positions (94, 95), de la LDV (97) et de l'empreinte (98) au sol de l'image acquise, à partir des CPDV disponibles à bord.

7. Procédé de géo localisation d'un capteur embarqué selon l'une des revendications précédentes, **caractérisé en ce que** l'image terrain est déplacée latéralement en latitude longitude et/ou « zoomée » ou « dezoomée ».

8. Procédé de localisation d'une cible à partir d'un capteur embarqué géo-localisé selon l'une des revendications précédentes, **caractérisé en ce qu'**il comprend une étape de localisation de la cible par rapport au capteur.

9. Capteur d'images (100) ayant une ligne de visée, LDV et comportant :
- un imageur (6) apte à acquérir des images, ayant un axe optique et destiné à être embarqué à bord d'un aéronef (200),
- un télémètre (1) harmonisé avec l'axe optique de l'imageur, destiné à être embarqué à bord de l'aéronef, l'axe optique du télémètre définissant la LDV du capteur,
- un moyen de poursuite destiné à être embarqué à bord de l'aéronef, configuré pour permettre à la LDV de rester accrochée sur un élément fixe au sol (62),
- un dispositif (7, 8) configuré pour déterminer les conditions de prise de vue, CPDV, du capteur, c'est-à-dire au minimum sa position géographique et l'orientation de sa LDV, destiné à être embarqué à bord de l'aéronef,
et comportant en outre :
- un dispositif configuré pour la visualisation (2) temps réel des images acquises par l'imageur (6), avec repérage dans ces images de l'axe du télémètre au moyen d'un « réticule » (21) dont la direction en espace scène représente la LDV du capteur d'images,
- un dispositif (3) configuré pour permettre à un opérateur (10) de déplacer l'orientation de la LDV,
- une base de données terrain, BD terrain (9) planimétrique et altimétrique, géo-référencée,
- un dispositif configuré pour l'affichage (5) d'une zone de la BD terrain, muni d'un pointeur apte à être commandé par l'opérateur (10) par des moyens de commande (11) du pointeur, et
- une unité de traitement (4) reliée aux éléments précédents et configurée pour mettre en œuvre le procédé de géo localisation selon l'une quelconque des revendications précédentes.

10. Capteur d'images (100) selon la revendication précédente, **caractérisé en ce que** le dispositif de visualisation (2) et/ou le dispositif (3) permettant à un opérateur de déplacer l'orientation de la LDV, et/ou la BD terrain (9), et/ou le dispositif d'affichage (5) d'une zone de la BD terrain, et/ou l'unité de traitement (4) sont déportés ou destinés à être embarqués à bord de l'aéronef.

## Patentansprüche

1. Verfahren zur Geolokalisierung eines Bildsensors (100), welcher eine Sichtlinie, LDV, (101) aufweist und an Bord eines Luftfahrzeugs (200) mitgeführt wird, wobei die geografische Position des Sensors sowie die Ausrichtung seiner LDV annähernd sind, wobei das Verfahren Folgendes umfasst:
- einen Schritt des Schaffens mindestens einer Gelegenheits-Landmarke, welcher folgende Teilschritte umfasst:
❖ auf einem Anzeigebildschirm (2) erfasster Bilder, mit Markierung in diesen Bildern der Achse eines Entfernungsmessers (1) mithilfe einer Einblendung vom Typ "Fadenkreuz" (21), dessen Richtung im Szenenraum die LDV des Bildsensors darstellt, Markieren, durch einen Bediener (10), eines bemerkenswerten festen Elements am Boden (62),
❖ Verschieben der LDV durch den Bediener, um das Fadenkreuz (21), welches die Achse des Entfernungsmessers (1) verkörpert, auf dieses feste bemerkenswerte Element (62) zu bringen,
❖ Verfolgen dieses festen Elements (62) durch Verfolgungsmittel,
❖ Schätzen der geografischen Position dieses festen Elements anhand von Aufnahmebedingungen, CPDV, welche durch eine Vorrichtung (7, 8) bereitgestellt werden, welche in der Lage ist, diese zu bestimmen, wobei diese Position ebenfalls annähernd ist,
❖ anhand der annähernden Position des verfolgten festen Elements, Suchen, in einer Geländedatenbank "BD terrain" (9) desjenigen Ortes, welcher einem auf das feste Element (62), welches annähernd positioniert ist, zentrierten Bereich entspricht, wobei dieser Bereich vorbestimmte Abmessungen aufweist,
❖ Anzeigen eines Geländebildes (91) dieses Ortes, konstruiert anhand der BD terrain, und Markieren, durch den Bediener, des bemerkenswerten Elements auf diesem Bild (95),
❖ Anpeilen, durch den Bediener (10), in dem angezeigten Geländebild (91, 91'), dieses bemerkenswerten Elements, und Abrufen aus der BD terrain (9) der angepeilten geografischen Koordinaten, wobei das feste bemerkenswerte Element (95), welches die LDV verfolgt, so zur Gelegenheits-Landmarke wird,
- wobei, da der Sensor (100) in Bezug auf die Gelegenheits-Landmarke (95) in Bewegung ist, ein Schritt der präzisen Lokalisierung des Sensors (100), welche anhand der geografischen Koordinaten dieser verfolgten Gelegenheits-Landmarke (95) durch einen Kalman-Filter bestimmt wird, welcher durch mehrere Abstandsmessungen zwischen dem Sensor und der Gelegenheits-Landmarke gespeist wird und durch mehrere Messungen der Ausrichtung der LDV des Sensors in Richtung der Gelegenheits-Landmarke, wobei eine Ausrichtungsmessung für jede Entfernungsmessung gleichzeitig die präzise Schätzung der Ausrichtung der LDV ermöglicht.

2. Geolokalisierungsverfahren eines an Bord mitgeführten Sensors nach dem vorhergehenden Anspruch, **dadurch gekennzeichnet, dass** die Schätzung der annähernden geografischen Position des verfolgten festen Elements nach einer Abstandsmessung mittels Entfernungsmessung erfolgt, welche die Aufnahmebedingungen, CPDV, ergänzt.

3. Geolokalisierungsverfahren eines an Bord mitgeführten Sensors nach einem der vorhergehenden Ansprüche, **dadurch gekennzeichnet, dass** das aus der Geländedatenbank "BD terrain" stammende angezeigte Bild ein angesichts der CPDV projiziertes Geländebild (92, 92') ist.

4. Geolokalisierungsverfahren eines an Bord mitgeführten Sensors nach einem der Ansprüche 1 bis 2, **dadurch gekennzeichnet, dass** es einen Schritt der Anzeige des erfassten, angesichts der CPDV projizierten Bildes umfasst, um sich auf ein reales Orthobild zurückzuführen.

5. Geolokalisierungsverfahren eines an Bord mitgeführten Sensors nach einem der vorhergehenden Ansprüche, **dadurch gekennzeichnet, dass** der Schritt der Schaffung einer Gelegenheits-Landmarke einen Schritt der Markierung des Abdrucks am Boden (98) des erfassten Bildes auf dem angezeigten Geländebild (91, 92) umfasst.

6. Geolokalisierungsverfahren eines an Bord mitgeführten Sensors nach einem der vorhergehenden Ansprüche, **dadurch gekennzeichnet, dass** es einen Schritt des Anzeigens des Geländebildes (93) umfasst, welches die globale Situation des gesamten geografischen Bereichs anzeigt, welcher die Positionen des Sensors und des verfolgten Punktes am Boden einschließt, mit Darstellung, auf diesem Geländebild, dieser Positionen (94, 95), der LDV, (97) und das Abdrucks (98) am Boden des erfassten Bildes, anhand der an Bord vorhandenen CPDV.

7. Geolokalisierungsverfahren eines an Bord mitgeführten Sensors nach einem der vorhergehenden Ansprüche, **dadurch gekennzeichnet, dass** das Geländebild seitlich in der Breite/Länge verschoben und/oder "gezoomt" oder "entzoomt" wird.

8. Geolokalisierungsverfahren eines Ziels anhand eines geolokalisierten, an Bord mitgeführten Sensors nach einem der vorhergehenden Ansprüche, **dadurch gekennzeichnet, dass** es einen Schritt der Lokalisierung des Ziels in Bezug auf den Sensor umfasst.

9. Bildsensor (100), welcher eine LDV aufweist und Folgendes umfasst:
- ein Bildgebungsinstrument (6), welches in der Lage ist, Bilder zu erfassen, welches eine optische Achse aufweist und dazu bestimmt ist, an Bord eines Luftfahrzeugs (200) mitgeführt zu werden,
- einen Entfernungsmesser (1), welcher mit der optischen Achse des Bildgebungsinstruments harmonisiert ist, dazu bestimmt, an Bord des Luftfahrzeugs mitgeführt zu werden, wobei die optische Achse des Entfernungsmessers die LDV des Sensors definiert,
- ein Verfolgungsmittel, dazu bestimmt, an Bord des Luftfahrzeugs mitgeführt zu werden, welches konfiguriert ist, um es der LDV zu ermöglichen, an dem festen Element am Boden (62) angehängt zu bleiben,
- eine Vorrichtung (7, 8), welche konfiguriert ist, um die CPDV des Sensors zu bestimmen, d. h., mindestens seine geografische Position und die Ausrichtung seiner LDV, dazu bestimmt, an Bord des Luftfahrzeugs mitgeführt zu werden, und ferner Folgendes umfassend:
- eine Vorrichtung, welche zur Anzeige (2) in Echtzeit der durch das Bildgebungsinstrument (6) erfassten Bilder konfiguriert ist, mit Markierung, in diesen Bildern, der Achse des Entfernungsmessers mithilfe eines "Fadenkreuzes" (21), dessen Richtung im Szenenraum die LDV des Bildsensors darstellt,
- eine Vorrichtung (3), welche konfiguriert ist, um es einem Bediener (10) zu ermöglichen, die Ausrichtung der LDV zu verschieben
- eine planimetrische und altimetrische, georeferenzierte Geländedatenbank, BD terrain, (9),
- eine Vorrichtung, welche zur Anzeige (5) eines Bereichs der BD terrain konfiguriert ist, welche mit einem Zeiger versehen ist, welcher in der Lage ist, durch den Bediener (10) mithilfe von Steuermitteln (11) des Zeigers bedient zu werden, und
- eine Verarbeitungseinheit (4), welche mit den vorhergehenden Elementen verbunden und konfiguriert ist, um das Geolokalisierungsverfahren nach einem der vorhergehenden Ansprüche umzusetzen.

10. Bildsensor (100) nach einem der vorhergehenden Ansprüche, **dadurch gekennzeichnet, dass** die Anzeigevorrichtung (2) und/oder die Vorrichtung (3), welche es einem Bediener ermöglicht, die Ausrichtung der LDV zu verschieben, und/oder die BD terrain (9), und/oder die Anzeigevorrichtung (5) eines Bereichs der BD terrain und/oder die Verarbeitungseinheit (4) ausgelagert oder dazu bestimmt sind, an Bord des Luftfahrzeugs mitgeführt zu werden.

## Claims

1. A method for geolocating an image sensor (100) having a line of sight, LDV (101) and installed on board an aircraft (200), the geographical position of the sensor and the orientation of its LDV being approximate, the method comprising:
- a step of creating at least one opportune landmark comprising the following substeps:
❖ an operator (10) locating, on a screen for displaying (2) acquired images, an observable stationary element (62) on the ground, the axis of a telemeter (1) being indicated in these images by means of a "reticle" type overlay (21) the direction of which in the scene space represents the LDV of the image sensor;
❖ the operator moving the LDV in order to place the reticle (21) marking the axis of the telemeter (1) on this stationary observable element (62);
❖ tracking of this stationary element (62) by tracking means;
❖ estimating the geographical position of this stationary element from image capture conditions, CPDV, delivered by a device (7, 8) able to determine them, this position also being approximate;
❖ on the basis of the approximate position of this tracked stationary element, searching in a terrain database, BD terrain (9), for the location corresponding to a zone centered on the approximately positioned stationary element (62), this zone being of preset size;
❖ displaying an image (91) of the terrain of this location, said image being constructed from the terrain database, the operator locating the observable element in this image (95);
❖ the operator (10) pointing to this observable element in the displayed terrain image (91, 91'), the geographical coordinates pointed to being retrieved from the terrain database (9), this observable stationary element (95) that the LDV is tracking thus becoming an opportune landmark;
- the sensor (100) moving relative to the opportune landmark (95), a step of determining the accurate location of the sensor (100), from the geographical coordinates of this tracked opportune landmark (95), using a Kalman filter supplied with several measurements of distances between the sensor and the opportune landmark and with several measurements of the orientation of the LDV of the sensor toward the opportune landmark, there being one orientation measurement for each telemetry measurement, simultaneously allowing the orientation of the LDV to be accurately estimated.

2. The method for geolocating an on-board sensor according to the preceding claim, **characterized in that** the approximate geographical position of the tracked stationary element is estimated following a telemetry distance measurement that complements the image capture conditions, CPDV.

3. The method for geolocating an on-board sensor according to any one of the preceding claims, **characterized in that** the displayed image obtained from the terrain database is a terrain image projected (92, 92') depending on the CPDV.

4. The method for geolocating an on-board sensor according to any one of claims 1 and 2, **characterized in that** it comprises a step of displaying the projected acquired image depending on the CPDV in order to obtain a real orthoimage.

5. The method for geolocating an on-board sensor according to any one of the preceding claims, **characterized in that** the step of creating an opportune landmark comprises a step of marking on the displayed terrain image (91, 92), the imprint on the ground (98) of the acquired image.

6. The method for geolocating an on-board sensor according to any one of the preceding claims, **characterized in that** it comprises a step of displaying the terrain image (93) showing the overall situation of the entirety of the geographical zone encompassing the positions of the sensor and the point tracked on the ground, these positions (94, 95), the LDV (97) and the imprint (98) on the ground of the acquired image being, based on the CPDV available on-board, represented in this terrain image.

7. The method for geolocating an on-board sensor according to any one of the preceding claims, **characterized in that** the terrain image is moved laterally in latitude/longitude and/or "zoomed" or "dezoomed".

8. A method for locating a target from a geolocated on-board sensor according to any one of the preceding claims, **characterized in that** it comprises a step of locating the target relative to the sensor.

9. An image sensor (100) having a LDV and comprising:
- an imager (6) able to acquire images, having an optical axis and intended to be installed on board an aircraft (200);
- a telemeter (1) harmonized with the optical axis of the imager and intended to be installed on board the aircraft, the optical axis of the telemeter defining the LDV of the sensor;
- a tracking means intended to be installed on board the aircraft, configured for allowing the LDV to remain targeted on a stationary element on the ground (62);
- a device (7, 8) configured to determine the CPDV of the sensor, i.e. at least its geographical position and the orientation of its LDV, and intended to be installed on board the aircraft;
and further comprising:
- a device configured for displaying (2) in real time images acquired by the imager (6), the axis of the telemeter being indicated in these images by means of a "reticle" (21) the direction of which in the scene space represents the LDV of the image sensor;
- a device (3) configured for allowing an operator (10) to move the orientation of the LDV;
- a georeferenced, altimetric, planimetric terrain database (9);
- a device configured for displaying (5) a zone of the terrain database, said device being equipped with a pointer able to be controlled by the operator (10) by way of means for controlling (11) the pointer; and
- a processing unit (4) connected to the preceding elements and configured for implementing the method for geolocating according to any one of the preceding claims.

10. The image sensor (100) according to the preceding claim, **characterized in that** the display device (2) and/or the device (3) allowing an operator to move the orientation of the LDV, and/or the terrain database (9), and/or the device for displaying (5) a zone of the terrain database, and/or the processing unit (4) are remote or intended to be installed on board the aircraft.
